Europäisches Patentamt

European Patent Office

Office européen des brevets

(19)

(11) Publication number: **0 016 526**
**B1**

(12) **EUROPEAN PATENT SPECIFICATION**

(45) Date of publication of patent specification: **04.05.83**

(51) Int. Cl.³: **G 02 B 7/26**

(21) Application number: **80300397.9**

(22) Date of filing: **12.02.80**

(54) Optical fibre connector.

(30) Priority: **26.02.79 US 15254**

(43) Date of publication of application:
**01.10.80 Bulletin 80/20**

(45) Publication of the grant of the patent:
**04.05.83 Bulletin 83/18**

(84) Designated Contracting States:
**DE FR GB IT NL**

(56) References cited:
**DE - A - 2 541 247**
**DE - A - 2 618 095**
**DE - A - 2 715 846**
**US - A - 3 628 036**
**US - A - 3 999 837**

**IBM TECHNICAL DISCLOSURE BULLETIN, vol.
21, no. 4, September 1978 F. P. CEFARELLI et
al. "Optical Circuit Module Connector" pages
1568 to 1570**
**IBM TECHNICAL DISCLOSURE BULLETIN, vol
14, no. 3, August 1971, R. R. CLARKE et al.
"Polarized Connector" page 721**

(73) Proprietor: **AMP INCORPORATED**
**Eisenhower Boulevard**
**Harrisburg Pennsylvania (US)**

(72) Inventor: **Bendiksen, Leonard Fjellheim**
**1012B Rolling Glen Drive**
**Harrisburg Pennsylvania (US)**
Inventor: **Schumacher, William Ludlow**
**353 Blacksmith Road**
**Camp Hill Pennsylvania (US)**

(74) Representative: **Stuart-Prince, Richard Geoffrey
et al,**
**20 Queensmere**
**Slough, Berkshire SL1 1YZ (GB)**

Courier Press, Leamington Spa, England.

## Optical fibre connector

The invention relates to a connector for coupling an optical fibre to an optoelectric device.

A known connector described in US—A—3,999,837 comprises a one-piece body including a sleeve portion adapted to receive, in one axial end, a ferrule terminating an optical fibre and, in the other axial end an optoelectric device in optical alignment with the optical fibre.

It is sometimes desirable to couple the optical fibre to an optoelectric device intended to be electrically connected to circuitry on a circuit board. A connector adpated for that purpose should occupy a minimum of space on the circuit board and enable the optoelectric device readily to be mounted in the connector without extensive manipulation of tooling which would be difficult in cramped conditions. Furthermore, a degree of variation in the size of the optoelectric device, (arising from manufacturing tolerances), should be accommodated.

According to the invention, the connector body includes a foot portion adapted for face-to-face attachment to a circuit board so that the sleeve portion extends generally parallel to the circuit board, the body being electrically conductive and provided with a flange and posts extending transversely of the sleeve portion, the flange and posts defining between them slots extending away from the foot portion for receiving a shielding can covering the other axial end of the sleeve portion, the connector additionally comprising a retention plate attachable to a portion of the body at the other axial end of the sleeve portion in a push fit in the direction of the axis of the sleeve portion to retain the optoelectric device in the sleeve portion.

In addition to the minimal space occupied by the connector, this enables the optoelectric device, together with the associated terminal leads, to be electrically shielded.

Preferably, the retention plate is provided with a plurality of resilient pins receivable in apertures in the portion of the body thereby to attach the retention plate to the body. Conveniently, the retention plate may be moulded in one piece of plastics material.

DE—A—2715846 discloses an optical fibre connector with a sleeve portion which can be formed integrally with a foot which could be used for mounting the connector to a circuit board and IBM TDB Vol. 21, No. 4, September, 1978, Pages 1568—70, discloses a connector block with apertures accommodating an optoelectric device and fibre optic terminations in respective opposite ends, the block being attached to a circuit board by a foot member with axes of the apertures extending parallel to the surface of the board.

In addition, DE—A—2541247 discloses connectors in which an optical fibre and an optoelectric device are retained in optical alignment in opposite ends of a sleeve clamped to a printed circuit board with the sleeve parallel to the board and the optoelectronic device retained in the sleeve by a retention member clamped to the end of the sleeve opposite to that receiving the fibre. DE—A—2618095 discloses a connector in which optically coupled elements are retained in optical alignment in a sleeve clamped to a printed circuit board. However, none of the above mentioned documents discloses the shielding facility of the invention.

A specific example of the invention will now be described with reference to the accompanying drawings in which:—

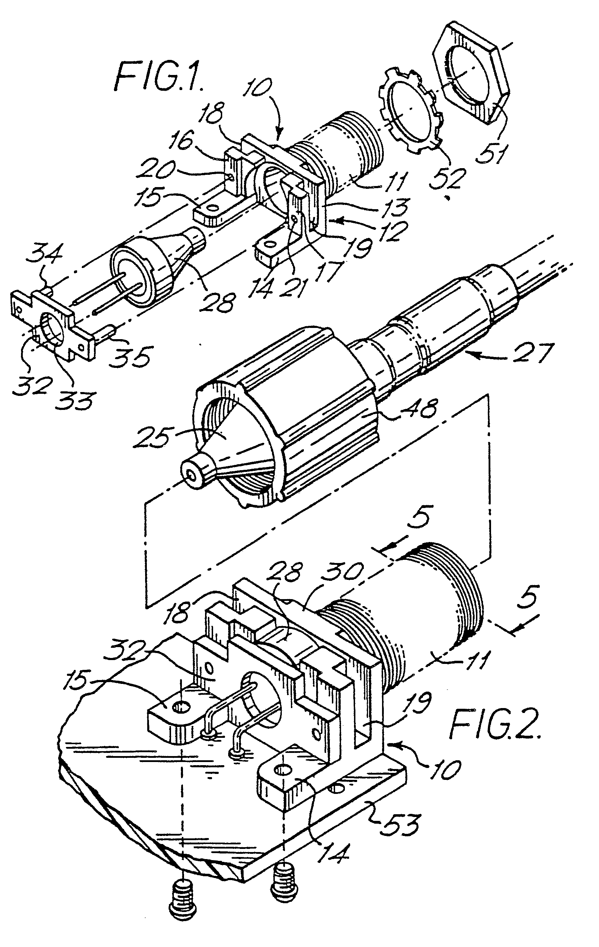

Figure 1 is an exploded perspective view of the connector and an optoelectric device;

Figure 2 is a perspective view of the connector assembled with the optoelectric device on a circuit board;

Figure 3 is a perspective view of the connector assembled with the optoelectric device and an optical fibre cable and aligned with a shielding can;

Figure 4 is a fragmentary axial cross-section taken along line 4—4 of Figure 3 of the connector assembly of Figure 3;

Figure 5 is a cross-sectional view taken along line 5—5 of Figure 2; and

Figure 6 is a fragmentary cross-sectional view taken along line 6—6 of Figure 3.

The connector includes a one-piece metal body 10 comprising a sleeve 11 and, at one axial end of the sleeve, a mounting portion 12 which comprises a pair of parallel feet 14 and 15 formed with apertures receiving screws for face-to-face attachment to a circuit board 53. The feet 14 and 15 extend axially from the base of a flange 13 extending transversely of the end of the sleeve. Posts 16 and 17 respectively, upstand from the feet, spaced from the transverse extremities of the flange, to define therewith slots 18 and 19. The posts are formed with axially extending apertures 20 and 21, respectively.

The sleeve is formed internally with two outwardly diverging conical bore portions 22 and 23 communicating at their converging ends with a cylindrical bore portion 24. The bore portions 22 and 23 are profiled to receive and precisely align a resilient conical nose portion 25 of a ferrule terminating an optical fibre 56 enclosed by a cable 27, and a resilient nose portion of a ferrule enclosing an optoelectric device 28. The optoelectric device may be mounted in the ferrule in alignment with a short optical fibre using the technique disclosed in our Japanese Patent Application No. 79/121543 and the optical fibre cable 27 may be terminated in the ferrule using the technique disclosed in our United States Patent No. 3,999,837.

As shown in Figure 5, the sleeve 11 is externally threaded except for a flat 29 formed on the underside. A bezel 30 is formed on the sleeve at the end of the thread adjacent the mounting portion 12.

A retention plate 32 is integrally moulded from plastics material with a central aperture 33 and two transversely spaced, hollow, radially resilient, pins 34 and 35, respectively.

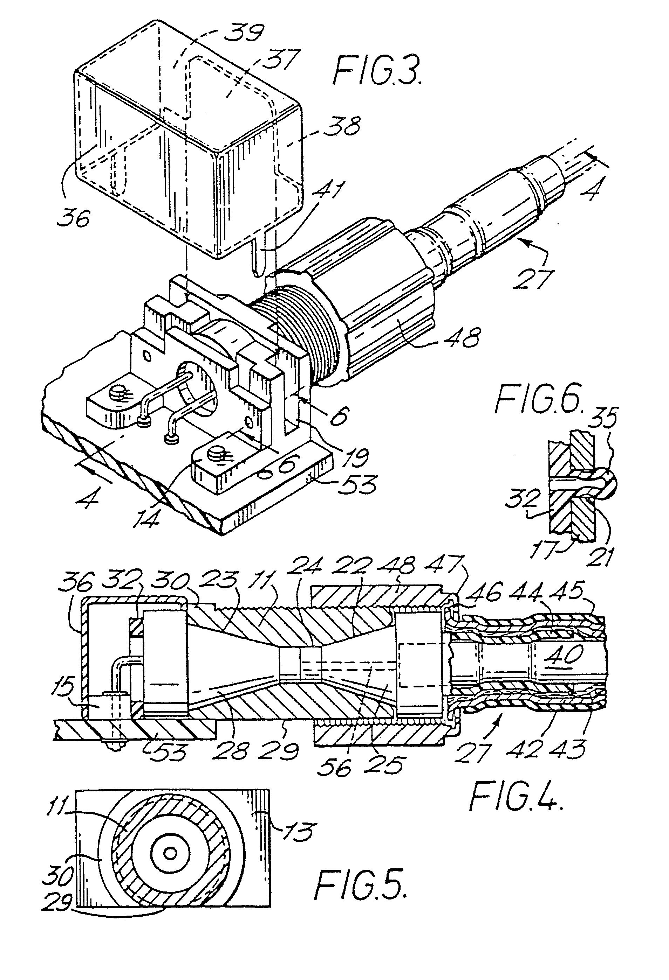

An electrical shielding can 36 (Figures 3 and 4) is a rectangular metal box open at the bottom and formed with a door 37 defined between transverse flanges 38, receivable in slots 18 and 19, respectively. Tabs 41 extend from opposite sides of the can and are received in apertures in the circuit board to mount the can on the circuit board with the flanges received in slots 18 and 19.

The optical fibre cable 27 includes an inner jacket 40 over which is located a ferrule sleeve portion 44. Strengthening fibres 43 extend over the sleeve portion 44 and under a metal sleeve 42 covered by an outer plastics or rubber sleeve 45. The sleeve assembly is secured to the jacket 40 by crimping. The end 46 of the sleeve 42 is flared so that it is engageable by an annular flange 47 on a mounting cap 48 which can be progressively fastened on sleeve 11 to urge the ferrule nose 25 into compressive engagement with the bore wall.

The sleeve portion 11 may be mounted in a panel aperture using nut 51 and washer 52.

The connector may be screwed onto the face of a circuit board 53 adjacent the edge with the socket 11 parallel to the plane of the board. The ferrule 28 enclosing the optoelectric device may then be pushed into one axial end of the sleeve into the bore 23 and secured therein in engagement with the bore wall by simply pushing the mounting plate pins 34 and 35 in the direction of the sleeve axis into respective apertures 21 and 22. As the pins are radially resiliently compressible, their depth of insertion may be altered whilst ensuring firm retention of the optoelectric device permitting manufacturing tolerances to be accommodated without extensive manipulation near the board.

The leads extending from the optoelectric device through the aperture 33 are then soldered to the circuit board and the optical fibre mounted on the other axial end of the sleeve by cap 48.

## Claims

1. A connector for coupling an optical fibre to an optoelectric device comprising a one piece body including a sleeve portion adapted to receive in one axial end, a ferrule terminating an optical fibre and, in the other axial end, an optoelectric device in optical alignment with the optical fibre characterized in that the body (10) includes a foot portion (14 or 15) adapted for face-to-face attachment to a circuit board (53) so that the sleeve portion extends generally parallel to the circuit board; the body (10) being electrically conductive and provided with a flange (13) and posts (16, 17) extending transversely of the sleeve portion (11), the flange (13) and posts (16, 17) defining between them slots (18, 19) extending away from the foot portion (14 or 15) for receiving a shielding can (36) covering the other axial end of the sleeve portion (11); and the connector additionally comprising a retention plate (32) attachable to a portion of the body (10) at the other axial end of the sleeve portion (11) in a push fit in the direction of the axis of the sleeve portion (11) to retain the optoelectric device (28) in the sleeve portion (11).

2. A connector according to Claim 1, characterized in that the retention plate (32) is provided with a plurality of resilient pins (34, 35) receivable in apertures (20, 21) in the portion of the body (10) thereby to attach the retention plate (32) to the body (10).

3. A connector according to Claim 1 or Claim 2, characterized in that the exterior of the sleeve portion (11) is formed with a flat (29) on one side and an external screw thread adjacent at least the one end, a bezel (30) encircling the screw thread adjacent the other end.

## Patentansprüche

1. Verbinder zum Koppeln einer optischen Faser mit einer optoelektrischen Vorrichtung, mit einem einstückigen Körper, der einen Muffenteil aufweist, zum Aufnehmen einer Abschlußhülse, die eine optische Faser abschließt, an einem axialen Ende, und einer optoelektrischen Vorrichtung in optischer Ausrichtung mit der optischen Faser am anderen axialen Ende, dadurch gekennzeichnet, daß der Körper (10) einen Fußteil (14 oder 15) aufweist, der für eine Befestigung Fläche - auf - Fläche mit einer Schaltungsplatte (53) ausgebildet ist, so daß sich der Muffenteil im wesentlichen parallel zur Schaltungsplatte erstreckt, wobei der Körper (10) elektrisch leitfähig ist und einen Flansch (13) und Stützen (16, 17) aufweist, die sich quer zum Muffenteil (11) erstrecken, wobei der Flansch (13) und die Stützen (16, 17) zwischen sich Schlitze (18, 19) festlegen, die sich vom Fußteil (14 oder 15) wegerstrecken, um einen Abschirmbecher (36) aufzunehmen, der das andere axiale Ende des Muffenteils (11) bedeckt, und daß der Verbinder zusätzlich eine Rückhalteplatte (32) aufweist, die an einem Teil des Körpers (10) am anderen axialen Ende des Muffenteils (11) in einem Stecksitz in Richtung der Achse des Muffenteils (11) befestigbar ist, um die optoelektrische Vorrichtung (28) im Muffenteil (11) zu halten.

2. Verbinder nach Anspruch 1, dadurch gekennzeichnet, daß die Rückhalteplatte (32) mit einer Mehrzahl elastischer Stifte (34, 35) ausgebildet ist, die in Öffnungen (20, 21) in dem Körperteil (10) aufnehmbar sind, um die Rückhalteplatte (32) dadurch am Körper (10) zu befestigen.

3. Verbinder nach Anspruch 1 oder 2, dadurch gekennzeichnet, daß das Äußere des Muffenteils (11) mit einer Abflächung (29) an einer Seite und einem äußeren Schraubengewinde, anschließend an mindestens das eine Ende, ausgebildet ist, wobei ein Anschlagring (30) das Schraubengewinde benachbart zum anderen Ende umgibt.

## Revendications

1. Connecteur pour coupler une fibre optique à un dispositif opto-électrique comprenant un corps d'une seule pièce comportant un manchon conçu pour recevoir, dans une extrémité axiale, une virole terminant une fibre optique et, dans l'autre extrémité axiale, un dispositif opto-électrique en alignement optique avec la fibre optique, caractérisé en ce que le corps (10) comprend un pied (14 ou 15) destiné à être fixé face à face à une carte à circuit (53) de manière que le manchon s'étende à peu près parallèlement à la carte à circuit, le corps (10) étant électriquement conducteur et comportant une bride (13) et des colonnettes (16, 17) s'étendant transversalement au manchon (11), la bride (13) et les colonnettes (16, 17) définissant entre elles des rainures (18, 19) qui s'éloignent du pied (14 ou 15) pour recevoir un capot de blindage (36) recouvrant l'autre extrémité axiale du manchon (11); et le connecteur comprenant en outre un plaque (32) de retenue pouvant être fixée à une partie du corps (10), à l'autre extrémité axiale du manchon (11), par emboîtement par poussée dans la direction de l'axe du manchon (11) pour retenir le dispositif opto-électrique (28) dans le manchon (11).

2. Connecteur selon la revendication 1, caractérisé en ce que la plaque (32) de retenue comporte plusieurs broches élastiques (34, 35) pouvant être logées dans des ouvertures (20, 21) de la partie du corps (10) afin de fixer la plaque (32) de retenue au corps (10).

3. Connecteur selon la revendication 1 ou la revendication 2, caractérisé en ce que l'extérieur du manchon (11) est formé avec un méplat (29) sur un côté et un filetage extérieur de vis à proximité d'au moins la première extrémité, un biseau (30) entourant le filetage de vis à proximité de l'autre extrémité.

FIG.1.

FIG.2.

FIG.3.

FIG.6.

FIG.4.

FIG.5.